# EUROPÄISCHE PATENTANMELDUNG

(11) **EP 3 130 429 A1**
(43) Veröffentlichungstag der Anmeldung: **15.02.2017**
(21) Anmeldenummer: 16183768.7
(22) Anmeldetag: 11.08.2016
(51) Int. Cl.: B25B 5/00, B23K 37/04, B23K 26/38, B23K 26/21

(54) **ANDRUCKELEMENT EINER SPANNVORRICHTUNG FÜR EINE SCHWEISSANLAGE UND SPANNVORRICHTUNG MIT MEHREREN ANDRUCKELEMENTEN**

(30) Priorität: 13.08.2015 DE 102015113371
(71) Anmelder: En-Ko Staudinger GmbH, 86165 Augsburg (DE)
(72) Erfinder: Mojses, Robert, 86568 Hollenbach (DE)
(74) Vertreter: Charrier Rapp & Liebau

(57) **Zusammenfassung**

Die Erfindung betrifft ein Andruckelement (5) einer Spannvorrichtung (3) für eine Schweißanlage mit einem innerhalb eines Führungsteils (51) axial verschiebbar geführten Andruckstempel (52, 53). Der Andruckstempel (52, 53) ist erfindungsgemäß durch eine Federanordnung (56) in Ausfahrrichtung vorgespannt und enthält einen Durchgangskanal (66, 67) für die Zuführung eines Druckmediums zu mindestens einer seitlichen Auslassöffnung (68) in einem endseitigen Druckstück (53) des Andruckstempels (52, 53).

## Beschreibung

Die Erfindung betrifft ein Andruckelement einer Spannvorrichtung für eine Schweißanlage nach dem Oberbegriff des Anspruchs 1. Die Erfindung betrifft außerdem eine Spannvorrichtung für eine Schweißanlage mit mehreren derartigen Andruckelementen.

Aus der DE 10 2004 052951 A1 ist eine Spannvorrichtung für Remote-Laserschweißanlagen bekannt, bei der an einem Spannbett mehrere teleskopartig ausfahrbare Stempel als Andruckelemente zur Abstützung zweier an den Schweißstellen übereinanderliegender Werkstücke angeordnet sind. Die Stempel sind in einem Stempelgehäuse axial verschiebbar geführt und stützen sich an einem innerhalb des Stempelgehäuses verschiebbaren Kolben ab. Durch Druckbeaufschlagung kann der Stempel über den Kolben entgegen der Kraft einer Rückstellfeder in eine Ausfahrstellung bewegt werden.

Bei derartigen Spannvorrichtungen in einer Schweißanlage ergibt sich die Problematik, dass während des Schweißvorgangs an der Schweißstelle Rauch oder Schmauch entsteht, der den Schweißverlauf stören und die Schweißqualität beeinträchtigen kann. Es werden daher bereits Gebläse eingesetzt, mit deren Hilfe eine Luftströmung in einen zwischen einem Werkstück und einer Spannplatte begrenzten Luftleitkanal eingeleitet wird. Allerdings ist die Luftzuführung hier begrenzt. Außerdem kann die Luft nicht gezielt zu einzelnen Bearbeitungsstellen gelenkt werden.

Aufgabe der Erfindung ist es ein Andruckelement einer Spannvorrichtung für eine Schweißanlage und eine Spannvorrichtung mit mehreren derartigen Andruckelementen zu schaffen, die einfach aufgebaut sind und eine verbesserte Rauch- und Schmauchentfernung mit einer optimierten Temperierung der Bearbeitungsstelle ermöglichen.

Diese Aufgabe wird durch ein Andruckelement mit den Merkmalen des Anspruchs 1 durch eine Spannvorrichtung mit den Merkmalen des Anspruchs 8 gelöst. Zweckmäßige Weiterbildungen und vorteilhafte Ausführungsformen der Erfindung sind Gegenstand der Unteransprüche.

Bei dem erfindungsgemäßen Andruckelement ist der innerhalb eines Führungsteils axial verschiebbar geführte Andruckstempel durch eine Federanordnung in Ausfahrrichtung vorgespannt und weist eine Durchgangsöffnung für die Zuführung von Luft oder einem anderen geeigneten Druckmedium zu mindestens einer seitliche Auslassöffnung in einem endseitigen Druckstück auf Über ein derartiges Andruckelement kann ein Druckfluid zur Rauch- und Schmauchentfernung oder zur Temperierung der Bearbeitungsstelle genau zur Bearbeitungsstelle gelenkt werden. Durch eine gezielte Steuerung der Druckfluidversorgung kann die Strömungsrichtung beeinflusst und besser an die unterschiedlichen Bearbeitungsaufgaben angepasst werden.

In einer besonders zweckmäßigen Ausführung kann der Andruckstempel einen in dem Führungsteil verschiebbaren Führungsbolzen enthalten, an dem das zur Anlage mit dem Werkstück gelangende Druckstück lösbar befestigt ist. Das in der Regel stark beanspruchte Druckstück des Andruckstempels kann so aus einem besonders verschleißfesten Material hergestellt und bei Bedarf auf einfache Weise ersetzt werden. Das endseitige Druckstück kann aber auch einteilig mit dem Führungsbolzen ausgeführt sein.

Bei einer zweiteiligen Ausführung des Andruckstempels mit Führungsbolzen und auswechselbarem Druckstück kann der für die Zuführung eines Druckfluids vorgesehene Durchgangskanal durch eine in dem Führungsbolzen angeordnete Durchgangsöffnung und ein mit mehreren seitlichen Auslassöffnungen verbundenes Sackloch im Druckstück gebildet sein.

Die vorzugsweise als Tellerfederpaket ausgeführte Federanordnung kann zweckmäßigerweise zwischen dem Andruckstempel und einem gegenüber dem Führungsteil verstellbaren Adapterstück eingespannt sein. Zweckmäßigerweise ist das Führungsteil über eine Gewindeverbindung axial verstellbar auf dem Adapterstück angeordnet. Durch Verstellung des Führungsteils gegenüber dem Adapterstück kann so die Vorspannung der Federanordnung eingestellt werden.

Auch im Adapterstück ist in einer zweckmäßigen Ausführung eine entsprechende Durchgangsöffnung für die Zuführung eines Druckfluids zum Andruckstempel vorgesehen.

Die Erfindung betrifft außerdem eine Spannvorrichtung für eine Schweißanlage mit einer ersten Grundplatte und einer gegenüberliegenden zweiten Grundplatte, wobei an der ersten Grundplatte mehrere Auflageelemente zur Auflage eines Werkstücks und an der zweiten Grundplatte mehrere den Auflageelementen gegenüberliegende Andruckelemente der vorstehend beschriebenen Art angeordnet sind. Durch eine gezielte Steuerung der Druckluftzufuhr zu den einzelnen Andruckelementen kann die Strömung des für eine optimale Rauch- und Schmauchentfernung durch die Andruckelemente geleiteten Druckfluids beeinflusst und somit ein optimierter Strömungsverlauf erzeugt werden. Durch die einzeln und getrennt voneinander mit Druckfluid beaufschlagbaren, separat ansteuerbaren Andruckelemente können je nach Schweißverlauf verschiedene Ausblasszenarien programmiert werden. Der Druckfluidströmung kann so eine bestimmte Richtung gegeben werden, so dass der Schweißschmauch z.B. schwallartig nach außen befördert wird.

In einer zweckmäßigen Ausführung weisen die Auflageelemente ein Auflageteil mit einem integrierten Staudruckkanal auf. Dadurch wird eine Auflagekontrolle mittels Staudrucksensor ermöglicht. Außerdem kann Blasluft zur Reinigung der Auflageflächen durchgeleitet werden.

Die beiden Grundplatten sind in vorteilhafter Weise zwischen zwei zueinander parallelen Schwenk- und Verriegelungsvorrichtungen angeordnet. Die Schwenk- und Verriegelungsvorrichtungen weisen vorzugsweise einen stationären Träger zur Halterung der ersten Grundplatte und einen mittels eines Scharniers schwenkbaren Träger zur Halterung der zweiten Grundplatte auf.

In einer besonders zweckmäßigen Ausführung enthält das Scharnier einen Scharnierbolzen, der innerhalb eines rechtwinklig zur Längsrichtung des stationären Trägers beweglichen Lagerstücks angeordnet ist. Dadurch kann die schwenkbare Druckplatte eine präzise Dreh-Senkbewegung ausführen.

Die Schwenk- und Verriegelungsvorrichtungen können einen Verriegelungsmechanismus mit mehreren an dem stationären Träger in dessen Längsrichtung verschiebbar angeordneten Verriegelungshaken zum Eingriff mit entsprechenden Verriegelungselementen an dem schwenkbaren Träger enthalten. Dadurch kann eine besonders stabile Halterung der beweglichen Grundplatte in der Schließstellung erreicht werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine obere und untere Druckplatte einer Spannvorrichtung für eine Schweißanlage;
- **Figur 2**: eine Schwenk- und Verriegelungseinrichtung;
- **Figur 3**: eine Detailansicht der Schwenk- und Verriegelungseinrichtung von Figur 2;
- **Figur 4**: ein Auflageelement in einer isometrischen Ansicht;
- **Figur 5**: das Auflageelement von Figur 4 in einer Schnittansicht.
- **Figur 6**: ein Andruckelement in einer isometrischen Ansicht und
- **Figur 7**: das Andruckelement von Figur 6 in einer Schnittansicht.

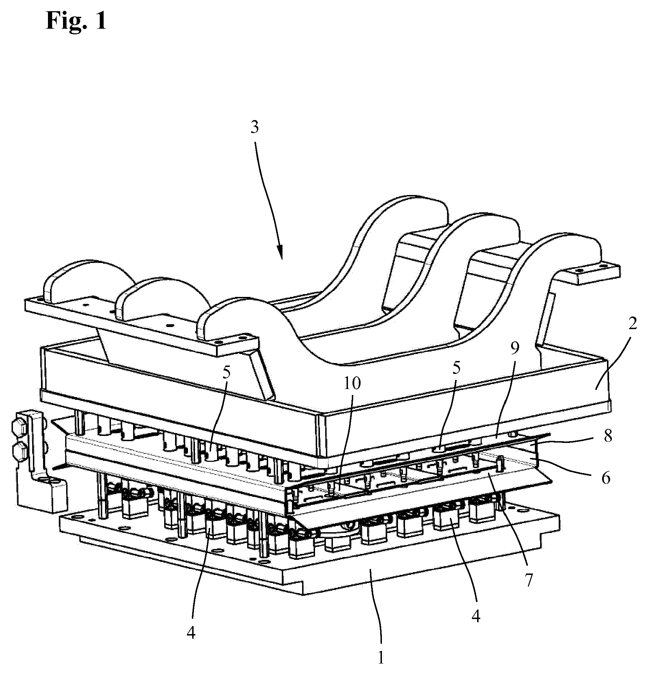

In der Figur 1 sind eine unten angeordnete erste Druckplatte 1 und eine darüber angeordnete zweite Druckplatte 2 einer im Folgenden noch näher erläuterten Spannvorrichtung 3 zum Spannen dünner Blechbauteile in einer Schweißanlage gezeigt. An der stationären ersten Druckplatte 1 sind mehrere nach oben vorstehende Auflageelemente 4 zur Auflage der Blechbauteile angeordnet. Je nach Anwendungsbereich können die Auflageelemente 4 in einer gewünschten und an die Bearbeitungsaufgabe angepassten Anordnung an der unteren Druckplatte 1 befestigt sein. Bei der gezeigten Ausführung sind die Auflageelemente 4 z.B. rasterförmig in mehreren Reihen und Linien an der unteren Druckplatte 1 montiert.

An der gegenüber der ersten Druckplatte 1 beweglichen zweiten Druckplatte 2 sind mehrere nach unten vorstehende Andruckelemente 5 zum Andrücken der Blechbauteile gegen die Auflageelemente 4 angebracht. Die Andruckelemente 5 sind vorzugsweise so an der oben angeordneten zweiten Druckplatte 2 angeordnet, dass sie in einer nach unten geklappten Schließstellung der zweiten Druckplatte 2 den unteren Auflageelementen 4 gegenüberliegen. An der ersten Druckplatte 1 ist eine mit seitlichen Aufkantungen 6 versehene untere Abdeckung 7 befestigt, die mit einer an der oberen zweiten Druckplatte 2 befestigten und mit seitlichen Abkantungen 8 versehenen oberen Abdeckung 9 in der nach unten geklappten Schließstellung der zweiten Druckplatte 2 einen Strömungskanal 10 begrenzt. In der oben angeordneten zweiten Druckplatte 2 sind hier nicht gezeigte Durchbrüche vorgesehen, durch die z.B. ein Laserstrahl zum Verschweißen oder zum Schneiden der Blechbauteile gelenkt werden kann.

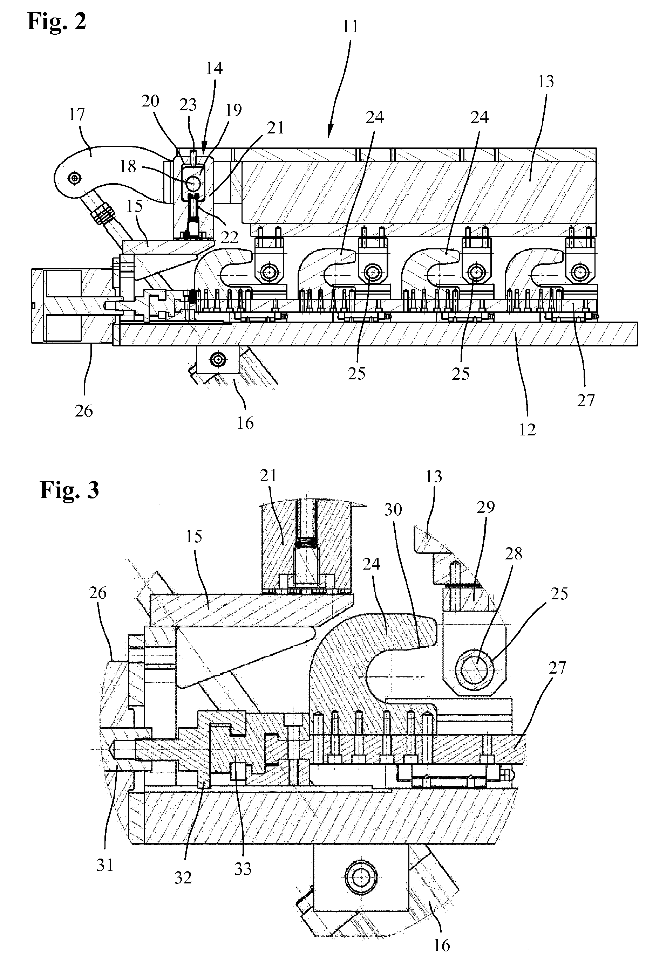

Die erste Druckplatte 1 und die demgegenüber bewegliche zweite Druckplatte 2 sind zwischen zwei in Figur 2 dargestellten Schwenk- und Verriegelungsvorrichtungen 11 angeordnet. Die Schwenk- und Verriegelungsvorrichtungen 11 weisen jeweils einen stationären unteren Träger 12 und einen demgegenüber schwenkbaren oberen Träger 13 auf. Der bewegliche obere Träger 13 ist über ein Scharnier 14 schwenkbar an einer Halterung 15 des stationären unteren Trägers 12 angelenkt und kann durch einen hier als Pneumatikzylinder ausgebildeten Linearantrieb 16 über einen Hebel 17 zwischen einer in Figur 2 gezeigten Schließstellung und einer angehobenen Offenstellung bewegt werden. Das Scharnier 14 enthält einen Scharnierbolzen 18, der innerhalb eines rechtwinklig zur Längsrichtung des unteren Trägers 12 beweglichen Lagerstücks 19 angeordnet ist. Um den Scharnierbolzen 18 ist die oben angeordnete zweite Druckplatte 2 schwenkbar angelenkt. Das Lagerstück 19 ist in einer rechteckigen Ausnehmung 20 eines auf der Halterung 15 befestigten Führungsteils 21 vertikal verschiebbar geführt und wird durch eine Druckfeder 22 nach oben gegen eine Einstellschraube 23 gedrückt. Durch ein derartiges Scharnier 14 kann ein senkrechtes Aufsetzen des schwenkbaren oberen Trägers 13 auf den unteren Träger 12 sichergestellt werden.

Die in Figur 2 dargestellte Schwenk- und Verriegelungsvorrichtung 11 weist auch einen Verriegelungsmechanismus zur verriegelten Halterung des oberen Trägers 13 in der Schließstellung auf. Der Verriegelungsmechanismus besteht aus mehreren an dem unteren Träger 12 in dessen Längsrichtung verschiebbar angeordneten Verriegelungshaken 24, die in Eingriff mit mehreren an der Unterseite des oberen Trägers hintereinander angeordneten Verriegelungselementen 25 gelangen. Die Verriegelungshaken 24 sind gleichmäßig voneinander beabstandet auf einer auf der Oberseite des unteren Trägers 12 verschiebbar geführten und mittels eines Pneumatikzylinders 26 verschiebbaren Schubstange 27 befestigt.

Wie besonders aus Figur 3 hervorgeht, sind die Verriegelungselemente 25 bei der gezeigten Ausführung als Rollen ausgebildet, die um eine Querstift 28 drehbar an einer an der Unterseite des oberen Trägers 13 befestigten Halterung 29 angeordnet sind. Die Verriegelungshaken 24 weisen eine keilförmige untere Anlagefläche 30 auf, die durch Verschiebung der Schubstange 27 zur Anlage mit dem als Rolle ausgeführten Verriegelungselement 25 gelangt. Zur Verbindung der Schubstange 27 mit einem axial beweglichen Kolben 31 des Pneumatikzylinders 26 ist eine klauenförmige Verbindung mit zwei kuppelbaren Verbindungselementen 32 und 33 vorgesehen.

Wie bereits erwähnt, werden die in Figur 1 gezeigten ersten und zweiten Grundplatten 1 bzw. 2 zwischen zwei zueinander parallelen Schwenk- und Verriegelungsvorrichtungen 11 gehalten. Die erste Grundplatte 1 ist an zwei zueinander parallelen unteren Trägern 12 und die darüber angeordnete zweite Grundplatte 2 an zwei zueinander parallelen oberen Trägern 13 befestigt. Durch Betätigung der beiden Linearantriebe 16 an den beiden Schwenk- und Verriegelungsvorrichtungen 11 kann die zweite Grundplatte 2 zwischen einer nach oben geklappten Be- und Entladestellung und einer in Figur 1 gezeigten Schließstellung bewegt werden. Wenn sich die zweite Grundplatte 2 in der Schließstellung befindet, kann sie durch eine Verschiebung der Verriegelungshaken 24 in Richtung der Verriegelungselemente 25 parallel zur unteren ersten Grundplatte 1 gegen diese gezogen werden.

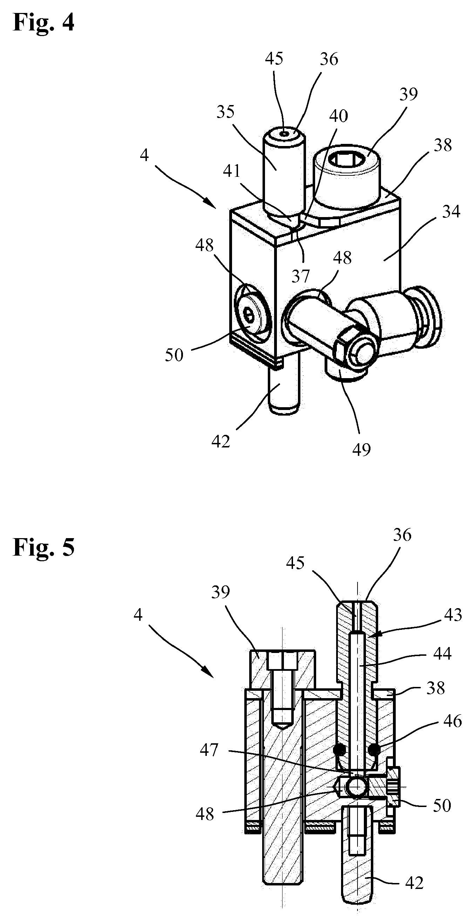

In den Figuren 4 und 5 ist eines der an der ersten Grundplatte 1 befestigten Auflageelemente 4 in verschiedenen Ansichten gezeigt. Das Auflageelement 4 enthält ein innerhalb eines Gehäuses 34 gegenüber diesem nach oben vorstehend angeordnetes Auflageteil 35 mit einer oberen Auflagefläche 36. Das stiftförmige Auflageteil 35 ist in eine Aufnahmeöffnung 37 an der Oberseite des Gehäuses 34 eingesetzt und wird über ein schwenkbares Sicherungselement 38 gehalten. Das Sicherungselement 38 ist über eine Schraube 39 an dem Gehäuse 34 schwenkbar befestigt und weist eine schlitzförmige Aussparung 40 zum Eingriff in eine Ringnut 41 an der Außenseite des stiftförmigen Auflageteils 35 auf. An der Unterseite des Gehäuses 34 ist außerdem ein nach unten vorstehender Passstift 42 zur passgenauen Montage des Auflageelements 4 auf der unteren ersten Grundplatte 1 angeordnet.

Wie aus Figur 5 hervorgeht, ist in dem stiftförmigen Auflageteil 35 ein durchgehender Staudruckkanal 43 mit einem unteren Bereich 44 und einem an der oberen Auflagefläche 36 mündenden oberen Bereich 45 vorgesehen. Der untere Bereich 44 des Staudruckkanals 43 weist einen größeren Durchmesser von z.B. 3 mm und der obere Bereich 45 einen kleineren Durchmesser von z.B. 1,5 mm auf. Das stiftförmige Auflageteil 35 ist in die Aufnahmeöffnung 37 des Gehäuses 34 über eine Dichtung 46 radial abgedichtet eingesetzt. Über eine Bohrung 47 am Boden der Aufnahmeöffnung 37 und senkrecht zur Bohrung 47 verlaufende, in die Bohrung 47 mündende Versorgungsbohrungen 48 im Gehäuse 34 kann Druckluft oder ein anderes geeignetes Druckfluid zu dem Staudruckkanal 37 im stiftförmigen Auflageteil 35 geleitet werden. In dem Gehäuse 34 sind mehrere Versorgungsbohrungen 48 vorgesehen, in die wahlweise ein in Figur 4 gezeigter Druckfluidanschluss 49 eingeschraubt werden kann. Die anderen Versorgungsbohrungen 48 können durch einen Verschlusstopfen 50 geschlossen werden.

Durch das vorstehend beschriebene Auflageelement 4 wird eine Auflagekontrolle mittels Staudrucksensor ermöglicht. Außerdem kann Blasluft zur Reinigung der Auflageflächen durchgeleitet werden.

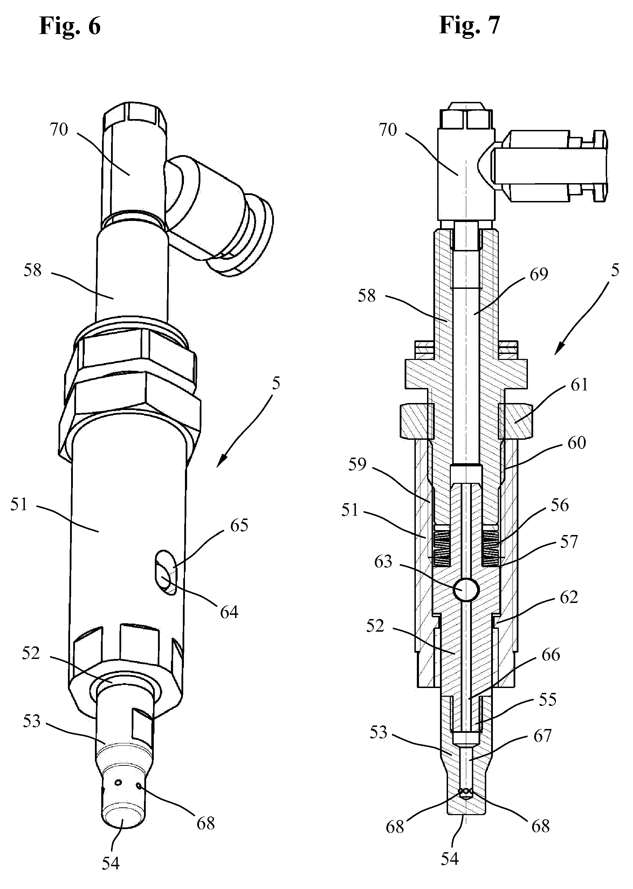

In den Figuren 6 und 7 ist eines der an der zweiten Grundplatte 2 befestigten Andruckelemente 5 in verschiedenen Ansichten gezeigt. Das Andruckelement 5 enthält einen innerhalb eines Führungsteils 51 axial verschiebbar geführten Andruckstempel, der bei der gezeigten Ausführung aus einem Führungsbolzen 52 und einem gegenüber dem Führungsteil 51 vorstehenden Druckstück 53 mit einer Andruckfläche 54 besteht.

Wie aus Figur 7 hervorgeht, ist das zur Anlage mit dem Werkstück konzipierte Druckstück 53 bei der gezeigten Ausführung auf einen Gewindeansatz 55 des Führungsbolzens 52 aufgeschraubt. Dadurch kann das Druckstück 53 bei Bedarf einfach ausgetauscht werden. Allerdings kann das Druckstück 53 auch einteilig mit dem Führungsbolzen 52 ausgeführt sein. Der durch den Führungsbolzen 52 und das das Druckstück 53 gebildete Andruckstempel wird durch eine Federanordnung 56 in Ausfahrrichtung vorgespannt. Bei der gezeigten Ausführung ist die Federanordnung 56 als Tellerfederpaket ausgeführt. Die Federanordnung 56 ist zwischen einer Ringschulter 57 des Führungsbolzens 52 und dem inneren Ende eines in das Führungsteil 51 eingeschraubten Adapterstücks 58 eingespannt. Durch entsprechende Verstellung des buchsenförmigen Führungsteils 51 gegenüber dem Adapterstück 58 kann die Vorspannung des Andruckstempels eingestellt werden.

Zur Verstellung des Führungsteils 51 gegenüber dem Adapterstück 58 weist das Führungsteil 51 ein Innengewinde 59 zum Eingriff mit einem Außengewinde 60 des auch zur Befestigung des Andruckelements 5 an der oberen Druckplatte 2 verwendbaren Adapterstücks 58 auf. Auf den Außengewinde 60 ist außerdem eine Kontermutter 61 zur Sicherung der gewünschten Vorspannung der Federanordnung 56 angeordnet. Von der Federanordnung 56 wird der Führungsbolzen 52 in Richtung eines Ringbunds 62 an der Innenseite des buchsenförmigen Führungsteils 51 gedrückt. Zur Begrenzung der Axialbewegung des Führungsbolzens 52 innerhalb des Führungsteils 51 ist in eine radiale Bohrung 63 des Führungsbolzens 52 ein in Figur 6 gezeigter Anschlagstift 64 eingesetzt, der in ein seitliches Langloch 65 des Führungsteils 51 eingreift.

In Figur 7 ist erkennbar, dass in dem Führungsbolzen 52 eine in dessen Längsrichtung verlaufende, zentrale Durchgangsöffnung 66 vorgesehen ist. In dem am freien Ende des Führungsbolzens 52 angeordneten Druckstück 53 ist ein mit der Durchgangsöffnung 66 im Führungsbolzen 52 und mit radialen Auslassöffnungen 68 in Verbindung stehendes Sackloch 67 vorgesehen. Durch die Durchgangsöffnung 66 in dem Führungsbolzen 52 und das Sackloch 67 mit den radialen Auslassöffnungen 68 im Druckstück 53 wird im Andruckstempel ein Durchgangskanal gebildet, durch den Luft oder ein anderes geeignetes Druckmedium zur Rauch- und Schmauchentfernung geleitet werden kann. Die radialen Auslassöffnungen 68 sind in dem Druckstück 53 über den Umfang gleichmäßig verteilt oberhalb der Andruckfläche 54 angeordnet. Für die Zuführung des Druckmediums zum Führungsbolzen 52 ist in dem Adapterstück 58 eine zentrale Durchgangsöffnung 69 vorgesehen. An dem Eingang der Durchgangsöffnung 69 ist in das Adapterstück 58 ein Druckfluidanschluss 70 eingeschraubt.

## Patentansprüche

1. Andruckelement (5) einer Spannvorrichtung (3) für eine Schweißanlage mit einem innerhalb eines Führungsteils (51) axial verschiebbar geführten Andruckstempel (52, 53), **dadurch gekennzeichnet, dass** der Andruckstempel (52, 53) durch eine Federanordnung (56) in Ausfahrrichtung vorgespannt ist und einen Durchgangskanal (66, 67) für die Zuführung eines Druckmediums zu mindestens einer seitlichen Auslassöffnung (68) in einem endseitigen Druckstück (53) des Andruckstempels (52, 53) enthält.

2. Andruckelement (5) nach Anspruch 1, **dadurch gekennzeichnet, dass** der Andruckstempel (52, 53) einen in dem Führungsteil (51) geführten Führungsbolzen (52) enthält, an dem das Druckstück (53) lösbar befestigt ist.

3. Andruckelement (5) nach Anspruch 2, **dadurch gekennzeichnet, dass** der Durchgangskanal (66, 67) durch eine in dem Führungsbolzen (2) angeordnete Durchgangsöffnung (66) und ein mit mehreren seitlichen Auslassöffnungen (68) verbundenes Sackloch (67) im Druckstück (53) gebildet wird.

4. Andruckelement (5) nach einem der Ansprüche 1 bis 3, **dadurch gekennzeichnet, dass** die Federanordnung (56) zwischen dem Andruckstempel (52, 53) und einem gegenüber dem Führungsteil (51) verstellbaren Adapterstück (58) eingespannt ist.

5. Andruckelement (5) nach Anspruch 4, **dadurch gekennzeichnet, dass** das Führungsteil (51) über eine Gewindeverbindung (59, 60) axial verstellbar auf dem Adapterstück (58) angeordnet ist.

6. Andruckelement (5) nach Anspruch 4 oder 5, **dadurch gekennzeichnet, dass** im Adapterstück (58) eine Durchgangsöffnung (69) für die Zuführung eines Druckfluids zum Andruckstempel (52, 53) angeordnet ist.

7. Andruckelement (5) nach einem der Ansprüche 1 bis 6, **dadurch gekennzeichnet, dass** die Federanordnung (56) als Tellerfederpaket ausgebildet ist.

8. Spannvorrichtung (3) für eine Schweißanlage mit einer ersten Grundplatte (1) und einer gegenüberliegenden zweiten Grundplatte (2), wobei an der ersten Grundplatte (1) mehrere Auflageelemente (4) zur Auflage eines Werkstücks und an der zweiten Grundplatte (2) mehrere den Auflageelementen (4) gegenüberliegende Andruckelemente (5) zum Andrücken des Werkstücks gegen die Auflageelemente (4) angeordnet sind, **dadurch gekennzeichnet, dass** die Andruckelemente (5) nach einem der Ansprüche 1 bis 7 ausgebildet sind.

9. Spannvorrichtung (3) nach Anspruch 8, **dadurch gekennzeichnet, dass** die Andruckelemente (5) einzeln und voneinander getrennt mit Druckfluid beaufschlagbar sind.

10. Spannvorrichtung (3) nach Anspruch 8 oder 9, **dadurch gekennzeichnet, dass** die Auflageelemente (4) ein Auflageteil (35) mit einem integrierten Staudruckkanal (43) aufweisen.

11. Spannvorrichtung (3) nach einem der Ansprüche 8 bis 10, **dadurch gekennzeichnet, dass** die erste Grundplatte (1) und die zweite Grundplatte (2) zwischen zwei zueinander parallelen Schwenk- und Verriegelungsvorrichtungen (11) angeordnet sind.

12. Spannvorrichtung (3) nach Anspruch 11, **dadurch gekennzeichnet, dass** die parallelen Schwenk- und Verriegelungsvorrichtungen (11) einen stationären Träger (12) zur Halterung der ersten Grundplatte (1) und einen mittels eines Scharniers (14) schwenkbaren Träger (13) zur Halterung der zweiten Grundplatte (2) aufweisen.

13. Spannvorrichtung (3) nach Anspruch 12, **dadurch gekennzeichnet, dass** die Schwenk- und Verriegelungsvorrichtungen (11) das Scharnier (14) einen Scharnierbolzen (18) enthält, der innerhalb eines rechtwinklig zur Längsrichtung des stationären Trägers (12) beweglichen Lagerstück (19) angeordnet ist.

14. Spannvorrichtung (3) nach einem der Ansprüche 11 bis 13, **dadurch gekennzeichnet, dass** die Schwenk- und Verriegelungsvorrichtungen (11) einen Verriegelungsmechanismus mit mehreren an dem stationären Träger (1) in dessen Längsrichtung verschiebbar angeordneten Verriegelungshaken (24) zum Eingriff mit entsprechenden Verriegelungselementen (25) an dem schwenkbaren Träger (13) enthalten.

15. Spannvorrichtung (3) nach Anspruch 14, **dadurch gekennzeichnet, dass** die Verriegelungshaken (24) eine keilförmige Anlagefläche (30) zur Anlage an den als Rollen ausgebildeten Verriegelungselementen (25) aufweisen
